# DEMANDE DE BREVET EUROPEEN

(11) **EP 1 063 037 A1**
(43) Date de publication de la demande: **27.12.2000**
(21) Numéro de dépôt: 00440189.9
(22) Date de dépôt: 23.06.2000
(51) Int. Cl.: B22D 17/22, B29C 45/26

(54) **Moule d'injection pour la conception d'une gâche**

(30) Priorité: 24.06.1999 FR 9908202
(71) Demandeur: FERCO INTERNATIONAL Ferrures et Serrures de Bâtiment Société Anonyme, 57400 Sarrebourg (FR)
(72) Inventeur: Klespert, Sylvain, 57400 Sarrebourg (FR)
(74) Mandataire: Rhein, Alain

(57) **Abrégé**

L'invention a trait à moule d'injection pour la conception d'une gâche comportant au moins une partie active (3) et au moins une partie passive (4), ledit moule (1) étant conçu par au moins une première matrice (5) présentant une empreinte (6) correspondant à la partie active (3) de ladite gâche (2), et une matrice complémentaire (7) comportant une empreinte (8) définissant la partie passive (4).

Selon l'invention l'empreinte (8) de la matrice complémentaire (7) se présente sous forme d'une empreinte primaire prévue apte à accueillir des modules d'empreinte élémentaires substituables (10), l'empreinte correspondant à ladite partie passive (4) de la gâche (2) étant défini, au moins en partie, par ladite empreinte primaire (8) et le ou les empreintes élémentaires substituables (10).

## Description

L'invention concerne un moule d'injection pour la conception d'une gâche comportant au moins une partie active et au moins une partie passive, laquelle définit, en tout ou partie, les moyens de fixation et/ou d'ancrage de cette gâche sur un profilé de menuiserie, ledit moule étant constitué d'au moins une première matrice, présentant une empreinte correspondant, au moins en partie, à la partie active de ladite gâche, et d'au moins une matrice complémentaire définissant, au moins partiellement, lesdits moyens de fixation et/ou d'ancrage, ces matrices étant susceptibles d'être réunies au travers d'un plan de joint.

La présente invention concerne le domaine de la conception par moulage d'une gâche. Dans ce contexte, l'invention a trait au domaine de la quincaillerie du bâtiment.

Un moule d'injection comporte de manière habituel au moins deux matrices au niveau de chacune desquelles l'on retrouve une partie d'empreinte correspondant à la pièce à mouler. D'ores et déjà à ce propos l'on observera que dans ce domaine du moulage d'éléments de ferrure, de telles matrices comportent, en réalité, plusieurs empreintes permettant, au travers d'une seule et même opération de moulage de réaliser, simultanément, plusieurs de ces éléments de ferrure.

Ainsi, dans le cadre d'un processus de moulage chacune des matrices prend position sur un outil servant à les manipuler sur la presse à injecter. Puis ces matrices sont réunies au travers d'un plan de joint, après quoi est injecté dans le moule le matériau en fusion. Après durcissement et refroidissement, le moule est réouvert consistant à écarter les matrices l'une de l'autre. Généralement dans l'une de ces matrices reste temporairement ancrée la pièce moulée jusqu'à son éjection à l'aide de moyens appropriés. Le cycle est alors à son point de départ et peut être reconduit.

Dans ce domaine de la quincaillerie du bâtiment des éléments de ferrures, tels que des gâches, comportent une partie, dénommée active, qui intervient dans la fonction de verrouillage. Une telle gâche comporte encore une autre partie, dénommée passive, dont la forme dépend davantage de son environnement, par exemple de la configuration de la menuiserie au niveau de laquelle cet élément de ferrure est destiné à prendre position.

Ainsi sue cette partie passive, l'on retrouve un certain nombre de moyens qui concourent au positionnement et/ou à la fixation et/ou à l'ancrage de cette gâche sur la menuiserie. En particulier, au niveau de cette partie passive d'une gâche, souvent (mais non exlusivement) délimitée par rapport à la partie active par une embase, peuvent s'étendre des ergots de positionnement et/ou de prépositionnement de ladite gâche le long d'une rainure ménagée, par exemple, en feuillure d'un cadre dormant.

A titre d'exemple, dans le cas d'une porte ou fenêtre conçue par assemblage de profilés, de type métallique ou en matière synthétique, ceux-ci définissent en feuillure de cette porte ou fenêtre une rainure de section en « U » ou en « T » permettant d'y loger un sabot s'étendant sous l'embase d'une telle gâche.

Celle-ci est encore traversée, dans la plupart des cas, d'ouvertures pour le passage d'organes de fixation, tels que des vis sachant qu'une telle ouverture se traduit, fréquemment, au niveau de la partie active, par un logement, permettant de recevoir la tête d'une telle vis de fixation.

Dans la mesure où il existe un nombre important de profilés différents entrant dans la conception d'un cadre dormant ou d'un châssis ouvrant de porte, fenêtre ou similaire, il est indispensable pour le fabriquant de ferrures de proposer à sa clientèle des gâches adaptables à chacun de ces profilés. Aussi pour un modèle de gâche déterminé, c'est à dire comportant une partie active bien définie, il lui faut gérer la fabrication et le stockage d'une multitude de gâches se différenciant les unes par rapport aux autres au travers de leur partie passive, précisément pour permettre la pose de ces gâches sur les différents profilés existants.

Evidemment, il lui faudra également disposer d'autant de moules pour la fabrication de ces gâches différentes, ce qui en fait un outillage onéreux. Il convient d'observer, en effet, qu'en raison de la complexité empruntée par les empreintes dans chacune des matrices d'un moule la réalisation de telles empreintes nécessite la mise en oeuvre de moyens d'usinage spécifiques, tels que l'électroérosion ou similaires.

Si, dans certains cas, la ou les empreintes d'une matrice peuvent être reprises pour rendre adaptable un élément de ferrure à une moindre modification apportée aux profilés qu'il est amené à équiper, il convient d'observer que la manoeuvre inverse est quasi impossible.

Ainsi, il n'est pas rare que pour des questions d'usure de la filière d'un fabriquant de profilés pour menuiserie, de type métallique ou synthétique, le jeu dans une rainure dans laquelle doit prendre position l'élément de ferrure vient à changer. Aussi, pour permettre encore, dans ces conditions, le positionnement convenable de l'élément de ferrure, celui-ci doit être ajusté en conséquence. Evidemment, lors du remplacement par le menuisier de sa filière, le problème se pose à nouveau nécessitant, pour le fabricant des éléments de ferrure, d'adapter une nouvelle fois son moule qui consiste, comme cela a été indiqué plus haut, à procéder au remplacement de ce moule.

De plus, on observera qu'au moins au niveau de leur partie passive, de tels éléments de ferrure, de type gâche, sont rarement optimisés du point de vue de la matière entrant dans leur conception, précisément en raison des techniques de réalisation des empreintes.

En fin de compte, la présente invention se veut à même d'apporter une solution à l'ensemble des problèmes précités.

A cet effet, l'invention concerne un moule d'injection pour la conception d'une gâche comportant au moins une partie active et au moins une partie passive, laquelle définit, en tout ou partie, les moyens de fixation et/ou d'ancrage de cette gâche sur un profilé de menuiserie, ledit moule étant conçu par au moins une première matrice, présentant une empreinte correspondant, au moins en partie, à la partie active de ladite gâche, et une matrice complémentaire comportant une empreinte définissant au moins partiellement la partie passive, ces matrices étant susceptibles d'être réunies au travers d'un plan de joint, caractérisé par le fait que l'empreinte de la matrice complémentaire se présente sous forme d'une empreinte primaire prévue apte à accueillir des modules d'empreinte élémentaires substituables, l'empreinte correspondant à ladite partie passive de la gâche étant défini, au moins en partie par ladite empreinte primaire et le ou les empreintes élémentaires substituables.

En somme, la partie passive de cette gâche peut être adaptée à volonté. Plus particulièrement, au niveau de l'empreinte primaire de la matrice complémentaire, destinée à la conception de cette partie passive, l'on vient disposer les modules d'empreintes élémentaires nécessaires au résultat recherché.

Dans la mesure où ces modules d'empreintes élémentaires sont substituables, il est assez facile de modifier, au niveau de la matrice correspondante du moule, certaines des caractéristiques de cette partie passive de la gâche pour satisfaire les exigences d'un menuisier et rendre, ainsi, adaptables les gâches aux différents profilés utilisés.

De plus, l'on remarquera que la subdivision d'une empreinte dans une matrice par des modules d'empreinte élémentaires peut être réalisée de telle manière que lesdits modules puissent être conçus par des procédés de fabrication standard du type fraisage, perçage et/ou tournage en comparaison à des procédés plus coûteux et souvent longs, comme l'électroérosion ou autre.

N'étant plus liée, dans ces conditions, par de tels procédés d'usinage contraignants, l'empreinte finalement conçue par l'intermédiaire de ces modules d'empreinte élémentaires peut être optimisée du point de vue de la matière nécessaire à la conception de l'élément de ferrure.

D'autres buts et avantages de la présente invention apparaîtront au cours de la description qui va suivre se rapportant à un exemple de réalisation et dont la compréhension sera facilitée en se référant aux dessins ci-joints.
- la figure 1 est une représentation schématisée et en plan d'une gâche, illustrant plus particulièrement la partie active de cette dernière
- la figure 2 est une vue schématisée et en coupe de la gâche visible dans la figure 1, sur cette figure étant représenté un exemple de réalisation de la partie passive d'une telle gâche ;
- la figure 3 est une représentation schématisée et en coupe d'un moule d'injection conçu selon l'invention pour la conception d'une gâche ;
- la figure 4 est une vue similaire à la figure 3, les deux matrices du moule étant écartées l'une de l'autre, l'une de ces matrices comportant une empreinte primaire prévue pour la réception de modules d'empreinte élémentaires substituables représentés en figure 5 ;
- les figures 6 et 7 représentent de manière schématisée, le procédé employé pour la définition de modules d'empreinte élémentaires facilitant la conception de ces derniers ;
- la figure 8 est une représentation schématisée et en plan d'une matrice d'un moule pour la conception de la partie passive d'une gâche ;
- la figure 9 est une vue en coupe longitudinale et schématisée de la figure 8 ;
- la figure 10 est une représentation schématisée et en plan de la matrice destinée à définir la partie active de l'élément de ferrure sous forme d'une gâche ;
- la figure 11 est une représentation schématisée et en coupe transversale de la figure 10.

Tel que représenté dans les figures des dessins ci-joints, la présente invention a trait à un moule d'injection 1 plus particulièrement destiné à la conception d'une gâche 2.

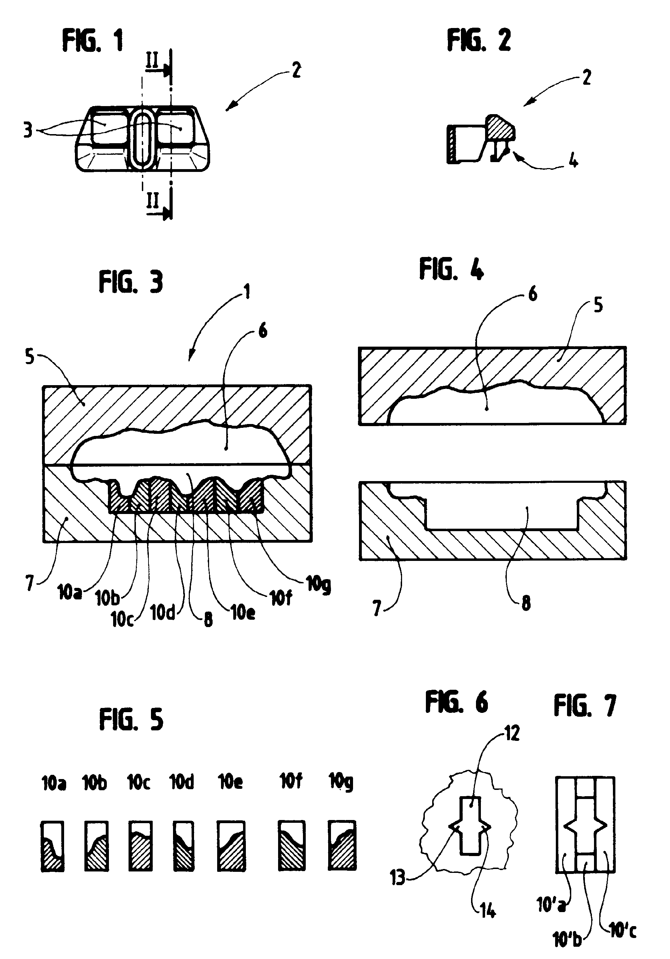

A ce propos et tel que visible sous forme d'un exemple de réalisation dans les figures 1 et 2, une telle gâche 2 comporte une partie 3 qualifiée d'active destinée à coopérer avec un organe de verrouillage défini. Ainsi, cette partie active est souvent celle qui est visible en feuillure du cadre dormant ou du châssis ouvrant d'une porte fenêtre ou autre que vient équiper une telle gâche 2. Cette dernière comporte encore une partie 4, dite passive, dont la configuration dépend habituellement de celle des profilés composant lesdits cadres-dormants et châssis-ouvrants et sur lesquels la gâche vient se fixer. Aussi, cette partie passive d'une gâche est susceptible de modifications, alors que la partie active reste en grande partie inchangée.

Pour cela, le moule 1 selon l'invention est conçu par au moins une première matrice 5, présentant une empreinte 6 correspondant, sensiblement, à la partie active 3 de ladite gâche 2, et une matrice complémentaire 7 comportant une empreinte 8 définissant au moins partiellement la partie passive 4, ces matrices 5, 7 étant susceptibles d'être réunies au travers d'un plan de joint.

On observera que si la description qui va suivre s'attache plus particulièrement à un moule dont les matrices comportent qu'une seule empreinte, dans la réalité industrielle elles comportent plusieurs empreintes identiques 6, 8 pour la conception, à chaque cycle de moulage, de plusieurs gâches 2.

Quoi qu'il en soit, selon l'invention l'empreinte 8 de la matrice complémentaire 7 se présente sous forme d'une empreinte primaire prévue apte à accueillir des modules d'empreinte élémentaires substituables 10a, 10b, 10c, 10d, 10e, 10f, 10g, l'empreinte correspondant à ladite partie passive 4 de la gâche 2 étant défini, en partie, par ladite empreinte primaire 8 et le ou les empreintes élémentaires substituables10a, 10b, 10c, 10d, 10e, 10f, 10g.

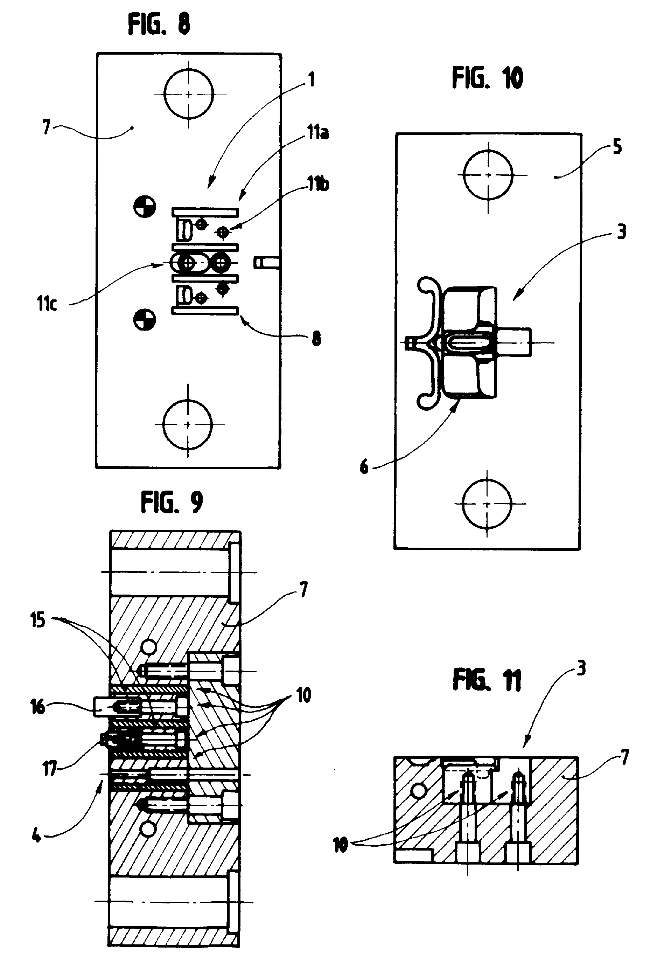

Comme cela apparaîtra plus loin, dans le cadre de la description des figures 8 à 11 des dessins, une empreinte primaire 8 comporte une ou plusieurs réservations 11a, 11b, 11c pour la réception de modules d'empreinte élémentaires 10, sachant encore que certains de ces derniers peuvent, eux-mêmes, remplir, dans certains cas, la fonction de noyaux, par exemple pour définir au niveau de la gâche une ouverture pour le passage d'un organe de fixation permettant de le rendre solidaire plus tard d'une menuiserie ou similaire.

Ainsi, si dans le cadre d'une telle gâche seuls certains détails de la partie passive 4 sont à modifier, par exemple pour la rendre adaptable à un type de menuiserie déterminé, il suffit, au niveau de cette matrice complémentaire 7, de remplacer voire de reprendre l'un ou l'autre des modules d'empreinte élémentaires 10. Il n'est donc pas nécessaire de remplacer toute la matrice, voire l'intégralité du moule pour répondre à ce besoin.

De plus, l'opération est réversible ce qui permet de répondre, sans contrainte, aux exigences formulées en la matière par les menuisiers.

Les figures 6 et 7 ont pour but d'illustrer qu'au travers d'un moule d'injection 1, conforme à l'invention, il est possible de remédier à la difficulté de réalisation d'une empreinte.

Ainsi, la figure 6 illustre une empreinte se distinguant par un évidement sensiblement rectangulaire 12 destiné, par exemple, à définir une patte d'ancrage, et comportant, de part et d'autre des entailles triangulaires 13, 14 pour la définition, par moulage, d'ergots à arrêtes saillantes prévus à même d'entailler, au moins partiellement, les parois du logement venant réceptionner, ultérieurement, ladite patte d'ancrage, ceci pour assurer une certaine immobilité de cette dernière. En subdivisant une telle empreinte par trois modules d'empreinte élémentaires 10'a, 10'b, 10'c, ceci comme on peut le voir dans la figure 7, de tels modules peuvent être conçus par des procédés d'usinage classiques du type fraisage ou similaire, alors que la conception d'une empreinte comme visible dans la figure 6 nécessite de faire appel à des techniques plus évoluées, plus coûteuses et plus longues à mettre en oeuvre.

Si l'on se reporte, à présent, aux figures 8 à 11, on voit une réalisation plus concrète de l'objet de la présente invention.

Plus précisément, les figures 8 et 10, illustrent, en plan, les deux matrices 7, 5 d'un moule d'injection, étant plus particulièrement visibles les empreintes 8, 6, de ces matrices 7, 5 correspondant, respectivement, à la partie passive 4 et à la partie active 3 d'une gâche 2.

En particulier, on retrouve au niveau de cette partie passive 4 des pattes ou sabots d'ancrage destinés à favoriser le positionnement d'une telle gâche le long d'une rainure en « T » ou en « U » telle que définie en feuillure de cadre dormant ou châssis ouvrant de porte ou fenêtre conçue par assemblage de profilés métalliques ou en matière synthétique.

De plus, au niveau de cette partie passive 4 l'on distingue, souvent, des ouvertures de forme ronde ou oblongue, destinées au passage d'organes de fixation, tels que vis ou similaires, prévus pour rendre solidaire ladite gâche de la menuiserie.

Dans certains cas, cette partie passive 4 peut encore être pourvue de moyens de prépositionnement de ladite gâche le long d'une rainure consistant en des ergots, tenons ou similaires.

En fait, la matrice 7 correspond à cette partie passive 4 de la gâche 2 comporte une empreinte primaire 8 comportant, en particulier, des réservations 11a, 11b, 11c, pour la réception de modules d'empreintes élémentaires 10 fonctions de la configuration à conférer à cette partie passive 4.

On note, en particulier, que de tels modules d'empreintes élémentaires 10 peuvent correspondre à des éléments de remplissage 15 de l'empreinte primaire 8 pour éviter, pour certains modèles de gâche ou, plutôt selon les caractéristiques de leur partie active 3, que le métal en fusion ne s'écoule dans certaines parties de ladite empreinte primaire 8. Contrairement lorsqu'il s'agit de définir une patte d'ancrage au niveau de cette partie passive 4 de la gâche 2, l'on vient retirer un tel élément de remplissage 15 à l'endroit où il convient, pour y substituer un autre module d'empreinte élémentaire, fonction de la forme de la patte d'ancrage à obtenir.

De même certaines de ces réservations 11b, 11c peuvent encore recevoir, en tant que module d'empreinte élémentaire 10, des noyaux 16, 17 pour la définition, par exemple, d'une ouverture dans ladite gâche 2.

Bien entendu la matrice complémentaire 7 reçoit, dans ces conditions, des moyens de fixation pour, une fois positionnés dans l'empreinte primaire 8, maintenir en place lesdits modules d'empreinte élémentaires 10.

Selon l'invention, l'empreinte 6 de la première matrice 5, destinée à la conception de la partie active 3 d'une gâche 2, peut, elle aussi, se présenter sous forme d'une empreinte primaire susceptible d'accueillir des empreintes élémentaires substituables 10. Cela peut s'avérer utile lorsque les modifications qui sont à apporter au niveau de la partie passive 4 ont une répercussion sur la forme de la partie active 3 de cette gâche 2.

Ainsi, s'il s'agit, pour rendre celle-ci adaptable à un autre type de menuiserie, de déplacer une ou plusieurs de ses ouvertures pour le passage de vis de fixation, il est nécessaire, également, de prendre toutes les dispositions au niveau de cette première matrice 5, venant à définir la partie active 3, pour que les réservations au niveau de cette dernière, destinées à accueillir la tête d'une vis de fixation, se situent bel et bien au droit des ouvertures correspondant à la partie passive 4.

On notera, en particulier, qu'une empreinte primaire, quelle que soit la matrice considérée, définit, en combinaison avec les modules d'empreinte élémentaire 10, la partie d'empreinte correspondant à la gâche 2.

Tel que cela ressort de la description qui précède, la présente invention permet d'éviter de concevoir, pour des gâches qui ne se distinguent les unes des autres que par des caractéristiques d'importance secondaire, des moules d'injection différents. En fait, le moule selon l'invention est facilement adaptable à de telles modifications subsidiaires de cette gâche, ce qui conduit, non seulement, à une très grande flexibilité dans la fabrication de ces dernières, mais également à une réduction substantielle du coût de l'outillage.

On notera, en particulier, que la flexibilité à laquelle il est fait référence ci-dessus a une conséquence directe sur l'importance des stocks chez le fabriquant. En effet, dans la mesure où celui-ci est capable de répondre, quasiment sans délai, à une demande spécifique, par une simple adaptation de ses moules d'injection, il peut s'affranchir de tenir des stocks importants habituellement nécessaires pour satisfaire sa clientèle dans les meilleurs délais.

Finalement, comme cela a été exposé plus haut, en venant optimiser l'empreinte dans une matrice grâce à la facilité de conception des modules d'empreinte élémentaires, le fabriquant, qui conçoit ces gâches par moulage en très grande série, peut réaliser une économie substantielle sur la matière première, sans que, pour autant, cela ne se répercute sur les performances de ces gâches, bien au contraire.

Aussi, comme cela ressort de la description qui précède, la présente invention représente un net progrès dans le domaine technique considéré.

## Revendications

1. Moule d'injection pour la conception d'une gâche comportant au moins une partie active (3) et au moins une partie passive (4), laquelle définit, en tout ou partie, les moyens de fixation et/ou d'ancrage de cette gâche (2) sur un profilé de menuiserie, ledit moule (1) étant conçu par au moins une première matrice (5) présentant une empreinte (6) correspondant, au moins en partie, à la partie active (3) de ladite gâche (2), et une matrice complémentaire (7) comportant une empreinte (8) définissant au moins partiellement la partie passive (4), ces matrices (5,7) étant susceptibles d'être réunies au travers d'un plan de joint (9), caractérisé par le fait que l'empreinte (8) de la matrice complémentaire (7) se présente sous forme d'une empreinte primaire prévue apte à accueillir des modules d'empreinte élémentaires substituables (10), l'empreinte correspondant à ladite partie passive (4) de la gâche (2) étant défini, au moins en partie, par ladite empreinte primaire (8) et le ou les empreintes élémentaires substituables (10).

2. Moule selon la revendication 1, caractérisé en ce que l'empreinte (6) de la première matrice (5), destinée à la conception de la partie active (3) d'une gâche (2) se présente sous forme d'une empreinte primaire susceptible d'accueillir des empreintes élémentaires substituables (10).

3. Moule selon la revendication 1 ou 2, caractérisé par le fait que l'empreinte primaire (8) comporte une ou plusieurs réservations (11a, 11b, 11c) pour la réception de modules d'empreinte élémentaires (10).

4. Moule selon l'une quelconque des revendications précédentes, caractérisé par le fait que les modules d'empreinte élémentaires (10) sont prévus aptes à former des éléments de remplissage (15) de l'empreinte primaire (8).

5. Moule selon l'une quelconque des revendications précédentes, caractérisé par le fait que des modules d'empreinte élémentaires (10) forment des noyaux (16, 17).

6. Moule selon l'une quelconque des revendications précédentes, caractérisé par le fait qu'une matrice (5 ou 7) comporte des moyens de fixation pour, une fois positionnés dans l'empreinte primaire (8), maintenir en place lesdits modules d'empreinte élémentaires (10).

7. Gâche, réalisé par moulage par injection à l'aide d'un moule conforme à l'une quelconque des revendications précédentes.
